(19) Europäisches Patentamt
European Patent Office
Office européen des brevets

(11) **EP 3 589 064 B1**

(12) **EUROPEAN PATENT SPECIFICATION**

(45) Date of publication and mention
of the grant of the patent:
**23.06.2021  Bulletin 2021/25**

(51) Int Cl.:
***H04W 76/00*** *(2018.01)*    ***H04W 76/20*** *(2018.01)*

(21) Application number: **19175278.1**

(22) Date of filing: **20.05.2019**

(54) **CONNECTION RE-ESTABLISHMENT, CONNECTION SETUP AND CELL SELECTION IN WIRELESS NETWORKS**

VERBINDUNGSWIEDERHERSTELLUNG, VERBINDUNGSAUFBAU UND ZELLENAUSWAHL IN DRAHTLOSEN NETZWERKEN

RÉÉTABLISSEMENT DE CONNEXION, CONFIGURATION DE CONNEXIONS ET SÉLECTION DE CELLULES DANS DES RÉSEAUX SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2018  US 201862687896 P**

(43) Date of publication of application:
**01.01.2020  Bulletin 2020/01**

(73) Proprietor: **Nokia Technologies Oy**
**02610 Espoo (FI)**

(72) Inventors:
• **AWADA, Ahmad**
**81249 Munich (DE)**
• **NASEER-UL-ISLAM, Muhammad**
**81737 Munich (DE)**
• **LASELVA, Daniela**
**9270 Klarup (DK)**
• **VIERING, Ingo**
**81549 Munich (DE)**
• **MICHALOPOULOS, Diomidis**
**81541 Munich (DE)**

(74) Representative: **Nokia EPO representatives**
**Nokia Technologies Oy**
**Karakaari 7**
**02610 Espoo (FI)**

(56) References cited:
**WO-A1-2017/157118    WO-A1-2018/083664**
**WO-A1-2018/219352**

**Description**

FIELD

Embodiments of the present invention relate in general to wireless communication networks and improving connection re-establishment, connection setup and cell selection procedures in such networks when network slicing is used.

BACKGROUND

In general, connection re-establishment is needed in communication networks for connecting one network device to another again after a previous connection is lost. Connection setup may be needed for an entirely new connection or for a subsequent connection after a connection failure, if there is no valid User Equipment, UE, context.

For example, in case of wireless communication networks operating according to 3rd Generation Partnership Project, 3GPP, a call re-establishment should be done if a call is disconnected. Moreover, Radio Resource Control, RRC, re-establishment procedure or connection setup procedure is required, for example, after a Radio Link Failure, RLF, or a handover failure. Typically the re-establishment and connection setup procedures have to be fast to minimize service interruption time.

The RRC re-establishment and connection setup procedures are linked to a cell selection process. Both of the procedures are initiated by a User Equipment, UE, upon detection of a RLF or a handover failure, for instance. The first step of the procedures is to select a suitable cell for connection re-establishment or setup. The UE may proceed with the RRC re-establishment and connection setup procedures once it has selected a suitable cell, and then form a connection with the selected, suitable cell.

Various standards have been developed by the 3GPP for cellular networks. For example, Long-Term Evolution (LTE) is one of the standards developed by the 3GPP and it has been deployed widely throughout the world. For LTE the 3GPP has standardized the RRC re-establishment and connection setup procedures already. Nevertheless, the demand for wireless communications is constantly increasing and hence the 3GPP is still developing LTE further. At the same the 3GPP is also developing a new standard for cellular networks, named 5G, which may also be referred to as New Radio, NR, for the radio access part of the network. Hence the RRC re-establishment and connection setup procedures may also need improvements.

There are various applications, with different requirements, that use cellular networks already. Nevertheless, the need to provide differentiated treatment to users will even increase in the future. Network Slicing is a concept under development, which allows differentiated treatment depending on the requirements of different users. With network slicing it is possible for Mobile Network Operators, MNOs, to consider customers as belonging to different tenant types, each having different service requirements that govern in terms of what slice types each tenant is eligible to use based on Service Level Agreement, SLA, and subscriptions.

However, the use of network slicing may also lead to problems and even cause service interruptions in case of a RLF or a handover failure. There is therefore a need for improving RRC re-establishment and connection setup procedures along with the cell selection process. Document WO2018083664 discusses a cell managing connectivity of the UE based on information related to network slices.

SUMMARY OF THE INVENTION

The invention is defined by the independent claims. Advantageous embodiments of the invention are given in the sub-claims.

BRIEF DESCRIPTION OF THE DRAWINGS

FIGURE 1 illustrates a RRC re-establishment procedure in case of a valid UE context;
FIGURE 2 illustrates a RRC re-establishment procedure when UE context cannot be retrieved;
FIGURE 3 illustrates an example of a slice identification message;
FIGURE 4 illustrates an example scenario in accordance with at least some embodiments of the invention;
FIGURE 5 illustrates an apparatus in accordance with at least some embodiments of the present invention;
FIGURE 6 is a flow graph of a first method in accordance with at least some embodiments of the present invention; and
FIGURE 7 is a flow graph of a second method in accordance with at least some embodiments of the present invention.

EMBODIMENTS

Embodiments of the present invention relate to a Radio Resource Control, RRC, re-establishment and connection setup procedures in wireless communication networks after a Radio Link Failure, RLF, or a handover failure. More specifically, the present invention provides improvements when network slicing is used. Network slicing may be seen as a form of a virtual network architecture, which enables multiple virtual networks to be formed on top of a common shared physical infrastructure. Such virtual networks may be adjusted, or customised, to match requirements of various customers, operators, applications, etc.

In the context of cellular networks a network slice may consist of a Radio Access Network, RAN, part and a Core Network, CN, part. Network slicing may rely on the principle that traffic for different slices is handled by different Packet Data Unit, PDU, sessions. Network can realise different network slices by scheduling and also by providing different L1/L2 configurations.

Considering a mobile communication system, such as 5G or New Radio, NR, or Long-Term Evolution, LTE, the communication system may not have homogeneous support, i.e., a certain network slice may not be supported by all cells. Unless a network slice is supported in the whole network, such a scenario exists at least at the boundary of a restricted area where the slice is supported. Another example would be an upgrade scenario, where cells are upgraded one by one with slice support.

This kind of non-homogeneous slice support may lead to problems. For example, in some scenarios a User Equipment, UE, using network slicing may decide to perform a re-establishment or connection setup procedure in another neighbouring cell which may, or may not, support network slices that the UE was connected to or would like to connect to. This may lead to service interruption or at least cause lengthy service interruption times. Hence the present invention makes it possible for the UE to make better decisions when selecting a suitable cell for the re-establishment or connection setup procedure when network slicing is used.

According to the embodiments of the present invention, a source cell, or a network node controlling the source cell, may provide to a UE, possibly proactively, assistance information related to network slices which are supported by neighboring cells. Consequently the UE may apply the received information during cell (re)-selection phase of the RRC re-establishment procedure or RRC connection setup procedure in case of a RLF or a handover failure.

Even though the present invention is described in the context of 5G/NR, it may be used for any wireless communication systems using network slicing. For example, it may be used for LTE or any other cellular system developed by the 3GPP in the future.

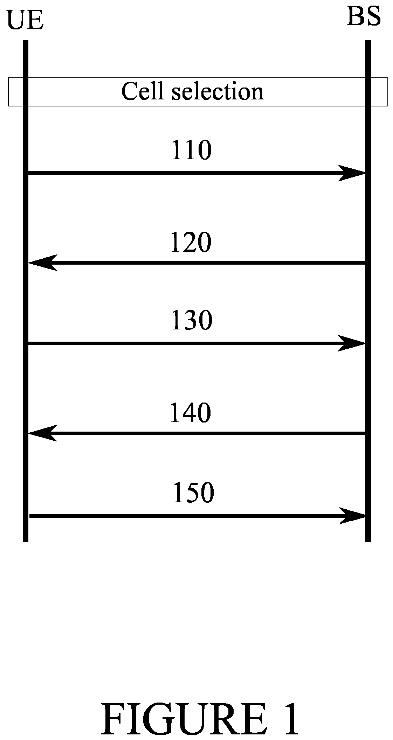

FIGURE 1 illustrates a RRC re-establishment procedure in case of a valid UE context. Typically a UE may initiate the RRC re-establishment procedure upon detection of a RLF or handover failure. A UE for which security has been activated may initiate the RRC re-establishment procedure in order to continue the RRC connection. However, if Access Stratum, AS, security has not been activated, the UE does not initiate the procedure but instead moves to RRC idle mode directly. On the other hand, if the UE decides to initiate the RRC re-establishment procedure, it may start a timer T311 upon the initiation of the RRC re-establishment procedure. The RRC re-establishment procedure may be performed in accordance with the 3GPP standard TS 38.331, NR Radio Resource Control (RRC) protocol specification (e.g., V15.2.0).

Referring to FIGURE 1 again, the first step of the RRC re-establishment procedure may be that the UE performs cell selection. However, if the timer T311, which is started upon the initiation of the RRC re-establishment procedure, expires, the UE moves to RRC idle mode. That is to say, the UE moves to RRC idle mode, from the RRC connected mode, if it did not find a suitable cell to select while the timer T311 was running. However, if the UE finds a suitable cell while the timer T311 is running, it may continue the procedure by transmitting a random access message 110 to a base station, BS. The present invention is not limited to NR or LTE, but in the context of NR the BS may be referred to as a gNB while in the context of LTE it may be referred to as a eNB.

The random access message may be, for example, a PRACH Random Access message (Msg1). Upon reception of the random access message 110, the BS may transmit a random access response 120 message to the UE. The random access response message 120 may be, for example, a PRACH Random Access Response message (Msg2).

The UE may continue the procedure by transmitting a re-establishment request message 130 to the BS. The re-establishment request message 130 may be, for example, a RRC Reestablishment Request message (Msg3). Upon reception of the re-establishment request message 130, the BS may transmit a re-establishment message 140 to the UE. The re-establishment message 140 may be, for example, a RRC Re-establishment message (Msg4). As a final step of the procedure, the UE may transmit a re-establishment complete message 150 to the BS. The re-establishment complete message 150 may be, for example, a RRC Re-establishment Complete message (Msg5). The procedure ends when the BS receives the re-establishment complete message 150.

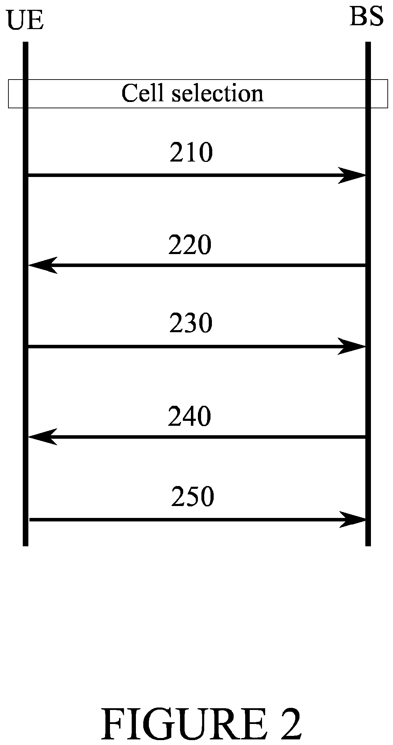

Typically the connection re-establishment procedure shown in FIGURE 1 succeeds only if the network is able to verify a valid UE context. However, if the UE context cannot be retrieved, the network may initiate a RRC connection establishment procedure. FIGURE 2 illustrates a RRC re-establishment procedure when UE context cannot be retrieved.

The procedure of FIGURE 2 may also start with cell selection and if the UE finds a suitable cell, it may continue the procedure by transmitting a random access message 210 to a BS. Upon reception of the random access message 210, the BS may transmit a random access response 220 message to the UE. The UE may continue the procedure by transmitting a re-establishment request message 230 to the BS. The messages 210, 220 and 230 in FIGURE 2 may correspond to the messages 110, 120 and 130 in FIGURE 1, respectively.

However, if the BS is not able to verify a valid UE context, it may transmit a setup message 240 upon reception of the re-establishment request message 230. The setup message 240 may be, for example, a RRC Setup message (Msg4). In response to the setup message 240, the UE may transmit a setup complete message 250. The setup complete message 250 may be, for example, a RRC Setup Complete message (Msg5). The procedure ends when the BS receives the setup complete message 250.

The cell selection may be performed according to one of the following two procedures, depending on the situation:

> **a)** If the UE should perform initial cell selection without any prior knowledge on which RF channels are NR carriers, the UE has to search for a strongest cell in each carrier frequency;
> **b)** If the UE may perform cell selection by leveraging stored information, e.g., about NR carrier frequencies, the UE only has to find a suitable cell.

In case of **b)**, the stored information leveraged by the UE during cell selection may comprise information corresponding to Radio Frequency, RF, channels or cell parameters that the UE may have stored when visiting these cells. However, this stored information does not comprise any information related network slices supported by the cells. For example, the stored information does not comprise any indication about the Single Network Slice Selection Assistance Information, S-NSSAIs, related to the cells. Generally speaking, S-NSSAIs comprise information related to network slices that the cells support, and a single cell may support tens or hundreds S-NSSAIs.

A cell may be considered as suitable if it fulfils a cell selection criterion, denoted by S. The cell selection criterion S in normal coverage may be fulfilled according to dedicated criteria denoted as cell selection RX level value, $S_{rxlev}$, and cell selection quality value, $S_{qual}$, that are captured in 3GPPP TS 38.304, User Equipment procedures in idle mode and RRC inactive state (e.g. V15.0.0).

For example, for intra-frequency and equal priority inter-frequency cell reselection criteria, the cell-ranking criterion $R_s$ for a serving cell and $R_n$ for a neighboring cell may be defined as follows,

$$R_s = Q_{meas,s} + Q_{hyst} \qquad\qquad (1)$$

$$R_n = Q_{meas,n} - Q_{offset} \qquad\qquad (2)$$

, where $Q_{meas,s}$ and $Q_{meas,n}$ are Reference Signal Received Power, RSRP, measurement quantities used in cell reselection, $Q_{hyst}$ and $Q_{offset}$ are offsets that can be used to control the re-selection procedure, e.g., to prioritize neighbouring cells over others. The UE may perform ranking of all cells that fulfil the cell selection criterion S and re-select a new cell, only if the new cell is better ranked than the serving cell for some time duration.

In addition, absolute priorities of different NR frequencies of inter-RAT, Radio Access Technology, frequencies may be provided as well, in accordance with 3GPPP TS 38.304, User Equipment procedures in idle mode and RRC inactive state (e.g. V15.0.0). In that case the UE may reselect another frequency which has higher reselection priority than the current NR frequency.

Moreover, the serving cell may configure the UE, using RRC Connection Release message, with some dedicated idle mobility control information such as frequency priorities or Physical Layer Cell IDs, PCIs, of cells belonging to inter-RAT frequencies in accordance with 3GPPP TS 38.331, Radio Resource Control (RRC) protocol specification (e.g. V15.2.0). So the UE would not use system information of target cells for cell-selection and re-selection if it is configured with this dedicated information. Nevertheless, the received dedicated information is discarded if the UE receives, following an RRC Connection Request, an RRC connection Setup message from the network.

One challenge related to the cell selection procedure is that it is slice-agnostic in a sense that the UE does not have any information related to networks slices supported by each cell, such as, for example, S-NSSAIs of each cell. Therefore the UE may camp on any suitable cell, which fulfils certain signal level or quality reception criteria as described above, regardless of whether the cell in question supports a certain network slice, or not.

Consequently, due to the existing RRC re-establishment procedure it may happen that a target cell, which was selected based a signal level or a quality reception criteria, does not support some or any of the network slices that the UE was connected to prior to the RLF or handover failure or would like to connect to next. In such a case the UE would thus suffer service interruption or discontinuity, and possibly fail to re-establish the connection of some or all of the network slices.

In addition, if the UE has moved to RRC idle mode upon the failure of RRC re-establishment, it may re-try and select another suitable cell to camp on. Nevertheless, the UE may again establish a new connection, which may or may not support the network slices that it was connected to prior to the RLF or handover failure or would like to connect to next.

Therefore the challenge is, how to improve the re-establishment procedure, especially for a UE that exploits network slicing. As discussed above, re-establishing a connection to a target cell that does not support network slices the UE was connected to prior to the RLF or handover failure would cause service interruptions. Moreover, the UE may like to connect to another network slice as well in the near future. Thus the present invention provides means for avoiding service interruptions in such cases by avoiding service interruptions and enabling continuous service via network slices, while also making it possible for the UE to select a suitable target cell based on its needs. The current 3GPP specifications do not provide means for addressing these issues.

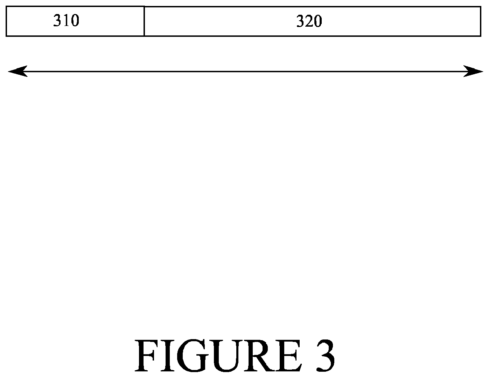

A network slice may be identified via a slice identification message, such as, for example, a Single Network Slice Selection Assistance Information, S-NSSAI, which may be referred to as third information in some embodiments of the present invention. Moreover, in some embodiments of the invention a S-NSSAI may be referred to first information. Other slice identification messages are possible but as an example, FIGURE 3 illustrates an example of a format of S-NSSAI. Currently, the 3GPP specifications only allow a UE to be connected to, and served by, eight S-NSSAIs at maximum. However, in the future more S-NSSAIs may be available for UEs to be connected to and served by. On the other hand, the number of network slices that each cell may support is not limited. Thus, as an example, a cell may support tens or even hundreds of S-NSSAIs.

As shown in FIGURE 3, a slice identification message may comprise at least one field. In some embodiments of the present invention, the slice identification message, or parts of it, may be referred to as third information. In some embodiments the slice identification message may refer to first information. For example, the slice identification message may comprise field 310, which may indicate a type of slice service. The type of slice service may be referred to as Slice Service Type, SST, and in some embodiments it may comprise 8 bits. In some embodiments the identification, such as, for example, the slide identification message may comprise only the type of service field. So in case of STT the total length of the identification may be 8 bits.

The slice identification message may also comprise a second part. For example, the slice identification message may comprise field 320, which may indicate a differentiator for slices. The differentiator for slices may be referred to as Slice Differentiator (SD) and in some embodiments it may comprise 24 bits. If the slice identification message comprises, for example, STT and SD fields, the total length of the slice identification message may be 32 bits.

In some embodiments the type of service field may have standardized and non-standardized values. For example, in case of STT values from 0 to 127 may belong to a standardized range. Thus STT value 1 may indicate that the slice in question is suitable for handling of 5G enhanced Mobile Broadband, eMBB, traffic, STT value 2 may indicate that the slice is suitable for handling of Ultra-Reliable Low Latency Communication, URLLC, traffic, etc. On the other hand, in some embodiments SD may be defined by an operator only.

In some embodiments of the invention, a UE may provide slice information upon requesting a service in terms of NSSAI using, for example, a setup complete message 250. The setup complete message may be a RRC Setup Complete message. However, the UE may not have any explicit awareness of network support for a given slice in RRC idle mode, for example, for cell selection and reselection.

Slice-based access control may be used though. For instance, operator-defined access categories may be used to enable differentiated handling for different slices. NG-RAN may broadcast barring control information (i.e. a list of barring parameters associated with operator-defined access categories) to minimize the impact of congested slices.

Moreover, Xn application protocol, XnAP, slice support of neighbor cells (e.g. Supported S-NSSAIs per tracking area) as well as requested S-NSSAI may be exchanged over Xn/X2 in a handover request. Xn and/or X2 is an interface between network nodes.

A NR Cell identity, ID, may be defined in terms of:

- PCI may be derived from both Primary Synchronization signal, PSS and Secondary Synchronization signal, SSS.
- NR Cell Identity, NCI: it may have fixed length and be broadcasted over-the-air in System Information 1, SIB1.
- gNB Identifier, gNB ID: It may be used to identify gNBs within a Public Land Mobile Network, PLMN. The gNB ID may be contained within the NCI of its cells. For example, the leftmost bits of the NCI may correspond to the gNB ID while the remaining rightmost bits may correspond to the local cell ID within the gNB.

- Global gNB ID: may be used to identify gNBs globally. The Global gNB ID may be constructed from the PLMN identity the gNB belongs to and the gNB ID. The Mobile Country Code, MCC, and Mobile Network Code, MNC, are the same as included in the NR Cell Global Identifier, NCGI.
- NCGI: May be used to identify NR cells globally. The NCGI may be constructed from the PLMN identity the cell belongs to and the NCI of the cell. It may be equivalent to Cell Global Identity, CGI, in LTE system.

For cell re-selection in multi-beam operations, the cell measurement quantity may be derived as the linear average of the power values of up to the maximum number of highest beam measurement quantity values above pre-configured threshold. If the highest beam measurement quantity value is below the threshold, the measurement quantity may be derived as the highest beam measurement quantity value. If rangeToBestCell Information Element, IE, is not configured by the network, the UE may perform cell reselection to the cell ranked as the best cell. On the other hand, if rangeToBestCell IE is configured, the UE may perform cell-reselection to the cell with the highest number of beams above the threshold among the cells whose ranking R value is within rangeToBestCell of the R value of the cell ranked as the best cell.

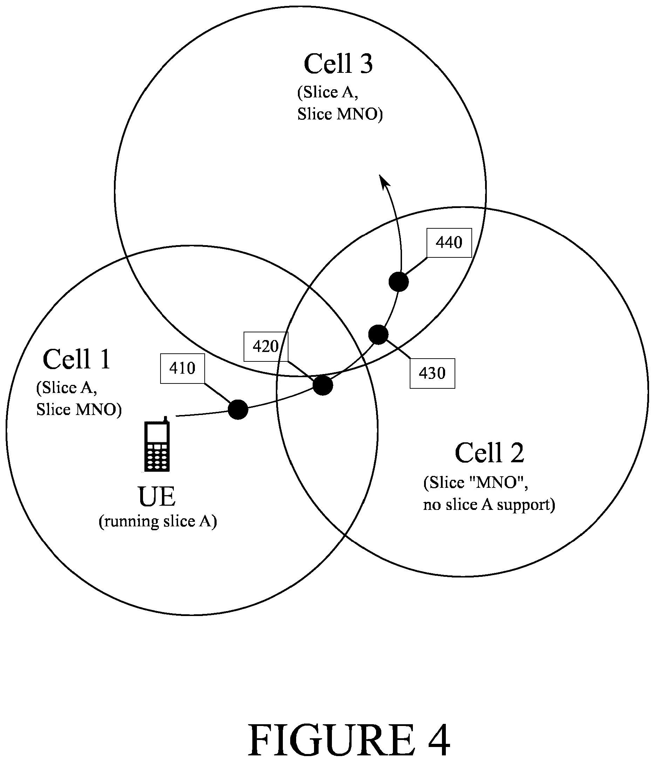

FIGURE 4 illustrates an example scenario in accordance with some embodiments of the invention. In this example, a UE running slice A, which may be referred to as a sA-UE, reestablishes a connection to cell 3 instead of cell 2 using slice-assistance information received from cell 1. In some embodiments of the invention the slice-assistance information may be referred to as third information. The UE may be running slice A, i.e., connected to cell 1 for using network slice A at the start of the process. That is to say, the UE may be actively accessing network slice A with cell 1.

At point 410, cell 1 may receive an early measurement report from the UE. The measurement report may contain measurement results regarding cell 2 and cell 3. At point 420, cell 1 may determine that cell 2 does not support network slice A. Thus cell 1 may decide to provide slice-assistance information to the UE using, for example, RRC signalling.

At point 430, the UE may experience a radio link failure. Consequently the UE may select cell 3 for connection re-establishment based on the received slice-assistance information. That is to say, the UE may prioritize cell 3 over cell 2. The UE may use for example offsets for $S_{rxlev}$ or $S_{qual}$ for the prioritization. The process ends at point 440, when the UE may successfully resume its connection to slice A in cell 3, or via cell 3.

According to the present invention, a source cell may provide to a user equipment information about at least one network slice supported by at least one neighboring cell of the source cell. This information may be referred to as third information in some embodiments. The user equipment uses the information for cell (re)-selection phase of a RRC re-establishment procedure or RRC connection setup procedure (e.g., in case UE ends up in idle mode upon failure of RRC re-establishment) if an RLF or handover failure occurs. The information may comprise, for example, information of S-NSSAIs that the at least one neighboring cell supports. In some embodiments, the information may be provided proactively before the UE needs to carry out cell (re)-selection phase of a RRC re-establishment procedure or RRC connection setup procedure.

The present invention may make it possible for the UE to make better decisions on which target cell to re-establish or to re-connect after a RLF or handover failure, among cells which are suitable from signal strength point of view, such that it can resume its connection to network slices as early as possible, thus minimizing the service interruption time. The UE may also take into account its future needs by selecting a cell which supports a network slice that the UE may want to use in the near future.

In the present invention a source cell provides to a UE, using RRC dedicated signalling, information about network slices related to at least one neighbour cell. Consequently the UE may receive the information and apply it during cell (re)-selection phase of the RRC re-establishment procedure or RRC connection setup procedure if a RLF or handover failure occurs. The information may be provided proactively. The information may be referred to as slice assistance information about supported S-NSSAIs of the at least one neighboring cell. The at least one neighboring cell may be considered as a target cell for the RRC re-establishment procedure or RRC connection setup procedure.

Moreover, in some embodiments the information about network slices that at least one neighbour cell supports may comprise an identity of the at least one neighbouring cell. In an embodiment, the at least one neighboring cell may support all or a subset of network slices that the UE uses to connect to and/or communicating with the source cell.

In some embodiments, the information about network slices related to at least one neighbour cell may comprise information about network slices supported by the at least one neighbour cell. Alternatively, or in addition, the information about network slices related to at least one neighbour cell may comprise an identity of at least one neighboring cell which does not support any of the at least one network slice that is used to connect to the user equipment. In such cases the information may be referred to as a "black list". The information may comprise an identity of the at least one neighboring cell.

With reference to FIGURE 4, the information about network slices related to at least one neighbour may be referred to as slice-assistance information or as a third information. With reference to FIGURE 3 the slice identification message may be referred to as slice-assistance information and/or third information. In some embodiments, the information about network slices related to at least one neighbour may comprise at least one S-NSSAI.

In some embodiments the information may comprise information related to multiple neighboring cells. For example, the information may comprise at least one S-NSSAI that each neighbouring target cell supports. The information may comprise both, SST and SD, parts of S-NSSAI. Alternatively, or additionally, the information may comprise only one part of S-NSSAI, i.e., SST or SD part only. The source cell may provide all the S-NSSAIs that the neighbouring cells support to the UE.

Furthermore, in some embodiments the information may comprise at least one indication related to a RF channel or a carrier frequency of the at least one neighbouring cell.

In some embodiments, the information about network slices related to at least one neighbour cell may comprise neighbouring cell offsets (e.g. reusing / extending $Q_{offset}$). The information may be applied by the UE when evaluating a cell selection RX level value ($S_{rxlev}$) and/or cell selection quality value ($S_{qual}$) and/or a cell-ranking criterion for cell re-selection. The UE may exploit these slice-specific offsets to prioritize the at least one neighboring cell supporting the S-NSSAIs of the UE over other cells which do not support the S-NSSAIs of the UE. In addition, or alternatively, the UE may select a best cell among the cells that support the S-NSSAI(s) of the UE using this information. The cell selection criterion is fulfilled when:

$S_{rxlev} > 0$ AND $S_{qual} > 0$

, where the simplified defintions of Srxlev and Squal can be described as:

$$S_{rxlev} = Q_{rxlevmeas} - Q_{offset} \qquad (3)$$

$$S_{qual} = Q_{qualmeas} - Q_{offset}$$

with $Q_{rxlevmeas}$ and $Q_{qualmeas}$ defining the cell selection receive and quality values, respectively, and $Q_{offset}$ being an offset that can be temporarily applied to a cell.

Here $Q_{offset}$ may be used to apply some prioritization among different neighboring cells. For example a higher $Q_{offset}$ value de-prioritize the cell and vice versa i.e. even if two cells have same signal strength/quality as measured by the UE, the UE would select a cell with lower offset value. For slice specific prioritization, source cell may provide a lower $Q_{offset}$ value for neighboring cells that support the slices needed by the UE and higher $Q_{offset}$ value for neighboring cells that do not support the slices needed by the UE. Alternatively, the UE may receive from the source cell new offsets (different from $Q_{offset}$) that may be applied directly to the computed $S_{rxlev}$ and $S_{qual}$ values.

In some embodiments, the information about network slices related to at least one neighbour cell may comprise a priority list of neighbouring cells. The priority list may be based on the Quality of Service, QoS, requirements of the network slices that the UE was connected to. For instance, assume in FIGURE 4 that there is another UE in cell 1 that is connected simultaneously to two networks slices: 1) eMBB and 2) URLLC. Moreover, assume that cell 2 and 3 support, in addition to the MNO network slice, eMBB and URLLC network slice, respectively, i.e., cell 2 supports MNO and eMBB network slices and cell 3 supports MNO and URLLC network slices. In this case, the network may configure the UE to prioritize the URLLC network slice over eMBB. That is among the two suitable cells 2 and 3, the UE would select cell 3 based on the priority list provided by the previously serving cell. Alternatively, the UE may derive such priority list itself based on received QoS requirements for each network slice.

In some embodiments the at least one neighbouring cell may be indicated using physical cell identities or NCI.

According to some embodiments of the invention, the source cell may update the information about network slices related to at least one neighbour cell each time the UE establishes a connection to a new network slice. The new network slice may be determined as new, e.g., by comparing it to a previously provided information. Alternatively, or in addition, the source cell may update the information about network slices related to at least one neighbour cell based on early measurement reports received from the UE.

In some embodiments, the UE may transmit location-related information to the source cell. Upon reception of the location-related information, the source cell may update the information about network slices related to at least one neighbour cell based on the location-related information received from the UE. The source cell may also provide the updated information about network slices related to at least one neighbour cell to the UE.

In some embodiments, the UE may apply the information about network slices related to at least one neighbour cell, received from the source cell, when performing cell (re)-selection during connection re-establishment or connection setup to a new target cell after an RLF / handover failure.

In some embodiment the UE may prioritize, for example during cell (re)-selection, the at least one neighbouring target cell provided by the source cell in the received information about network slices related to at least one neighbour cell. Prioritization may be done in various as explained in the following paragraphs.

Alternatively, or in addition, the UE may also select any suitable cell that supports the required S-NSSAIs.

In some embodiments the information about network slices related to at least one neighbour cell may comprise a minimum threshold for selection. For example, the UE may select any suitable cell that supports the required S-NSSAIs and compare its signal strength to a strongest cell on the same RF channel. If the suitable cell is not below the strongest cell on the same RF channel by more than $X$ dB where $X$ refers to the minimum threshold for selection, the UE may choose the cell in question.

In some embodiments, the UE may prioritize RF channels/frequencies indicated by the information about network slices related to at least one neighbour cell.

In some embodiments, the UE may apply the neighboring cell specific offsets when evaluating the cell selection RX level value ($S_{rxlev}$) and cell selection quantity value ($S_{qual}$) or the cell-ranking criterion for cell reselection. The neighboring cell specific offsets may be referred to as, e.g., reusing / extending $Q_{offset}$ and be related to the cell selection RX level value ($S_{rxlev}$) and/or cell selection quality value ($S_{qual}$) and/or the cell-ranking criterion for cell re-selection.

Moreover, in some embodiments the UE may select any suitable cell if it does not find any suitable cell that supports its required or desired S-NSSAIs.

In some embodiments the UE may apply beam-based cell quality derivation. In such a case it may also apply the received slice-specific offset to a threshold used to identify the cell with the highest number of beams. For instance, if rangeToBestCell IE is configured by the network, the UE may perform cell reselection to the cell with the highest number of beams above the threshold T among the cells whose ranking value R is within rangeToBestCell of the R value of the cell ranked as the best cell. Hence, if the network would like to prioritize cell 3 over cell 2 in FIGURE 4, it may configure a threshold *T2* for cell 2 that is much higher than threshold *T3* for cell 3. This may be performed by configuring the UE with dedicated neighbour cell specific offsets that may be applied to a default threshold *T*. Alternatively, the source cell may provide the UE directly with thresholds *T2* and *T3,* pertaining to cell 2 and cell 3, respectively.

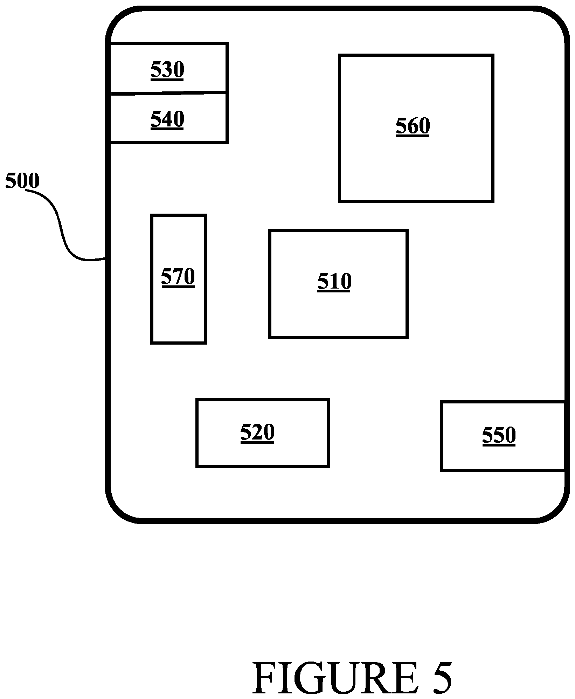

FIGURE 5 illustrates an example apparatus capable of supporting at least some embodiments. Illustrated is device 500, which may comprise, for example, a user equipment such as UE of FIGURE 4, a base station or a device controlling a cell. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. A processing core may comprise, for example, a Cortex-A8 processing core manufactured by ARM Holdings or a Steamroller processing core produced by Advanced Micro Devices Corporation. Processor 510 may comprise at least one Qualcomm Snapdragon and/or Intel Atom processor. Processor 510 may comprise at least one application-specific integrated circuit, ASIC. Processor 510 may comprise at least one field-programmable gate array, FPGA. Processor 510 may be means for performing method steps in device 500. Processor 510 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise computer instructions that processor 510 is configured to execute. When computer instructions configured to cause processor 510 to perform certain actions are stored in memory 520, and device 500 overall is configured to run under the direction of processor 510 using computer instructions from memory 520, processor 510 and/or its at least one processing core may be considered to be configured to perform said certain actions. Memory 520 may be at least in part comprised in processor 510. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular or non-cellular standard. Transmitter 530 may comprise more than one transmitter. Receiver 540 may comprise more than one receiver. Transmitter 530 and/or receiver 540 may be configured to operate in accordance with global system for mobile communication, GSM, wideband code division multiple access, WCDMA, 5G/NR, long term evolution, LTE, IS-95, wireless local area network, WLAN, Ethernet and/or worldwide interoperability for microwave access, WiMAX, standards, for example.

Device 500 may comprise a near-field communication, NFC, transceiver 550. NFC transceiver 550 may support at least one NFC technology, such as NFC, Bluetooth, Wibree or similar technologies.

Device 500 may comprise user interface, UI, 560. UI 560 may comprise at least one of a display, a keyboard, a touchscreen, a vibrator arranged to signal to a user by causing device 500 to vibrate, a speaker and a microphone. A user may be able to operate device 500 via UI 560, for example to configure access control mechanisms.

Device 500 may comprise or be arranged to accept a user identity module 570. User identity module 570 may comprise, for example, a subscriber identity module, SIM, card installable in device 500. A user identity module 570 may comprise information identifying a subscription of a user of device 500. A user identity module 570 may comprise cryptographic information usable to verify the identity of a user of device 500 and/or to facilitate encryption of communicated information and billing of the user of device 500 for communication effected via device 500.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Device 500 may comprise further devices not illustrated in FIGURE 5. For example, where device 500 comprises a smartphone, it may comprise at least one digital camera. Some devices 500 may comprise a back-facing camera and a front-facing camera, wherein the back-facing camera may be intended for digital photography and the front-facing camera for video telephony. Device 500 may comprise a fingerprint sensor arranged to authenticate, at least in part, a user of device 500. In some embodiments, device 500 lacks at least one device described above. For example, some devices 500 may lack a NFC transceiver 550 and/or user identity module 570.

Processor 510, memory 520, transmitter 530, receiver 540, NFC transceiver 550, UI 560 and/or user identity module 570 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the embodiment various ways of interconnecting at least two of the aforementioned devices may be selected without departing from the scope of the present invention.

It should be appreciated that future networks may utilize Network Functions Virtualization, NFV, which is a network architecture concept that proposes virtualizing network node functions into "building blocks" or entities that may be operationally connected or linked together to provide services. A Virtualized Network Function,VNF, may comprise one or more virtual machines running computer program codes using standard or general type servers instead of customized hardware. Cloud computing or data storage may also be utilized. In radio communications, this may mean node operations to be carried out, at least partly, in a Central/Centralized Unit, CU, (e.g. server, host or node) operationally coupled to Distributed Unit, DU, (e.g. a radio head/node). It is also possible that node operations will be distributed among a plurality of servers, nodes or hosts. It should also be understood that the distribution of labour between core net-work operations and base station operations may vary depending on implementation. In an embodiment, the server may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Therefore, in an embodiment, a CU-DU architecture is implemented. In such case the apparatus 500 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the radio node may be stand-alone apparatuses communicating with each other via a radio path or via a wired connection. Alternatively, they may be located in a same entity communicating via a wired connection, etc. It should be understood that the edge cloud or edge cloud server may serve a plurality of radio nodes or a radio access networks. In an embodiment, at least some of the described processes may be performed by the central unit. In another embodiment, the apparatus 500 may be instead comprised in the distributed unit, and at least some of the described processes may be performed by the distributed unit. In an embodiment, the execution of at least some of the functionalities of the apparatus 500 may be shared between two physically separate devices (DU and CU) forming one operational entity. Therefore, the apparatus may be seen to depict the operational entity comprising one or more physically separate devices for executing at least some of the described processes. In an embodiment, such CU-DU architecture may provide flexible distribution of operations between the CU and the DU. In practice, any digital signal processing task may be performed in either the CU or the DU and the boundary where the responsibility is shifted between the CU and the DU may be selected according to implementation. In an embodiment, the apparatus 10 controls the execution of the processes, regardless of the location of the apparatus and regardless of where the processes/functions are carried out.

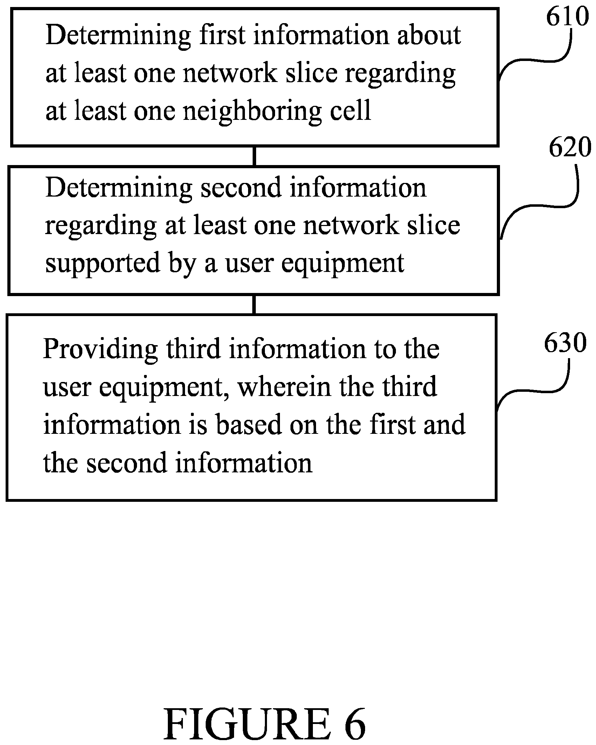

FIGURE 6 is a flow graph of a first method in accordance with at least some embodiments of the present invention. The first method may be performed by a source cell, a base station or by a network node controlling the base station or the source cell. The first method may comprise, at step 610, determining first information about at least one network slice regarding at least one neighboring cell.

The first method may also comprise, at step 620, determining second information regarding at least one network slice supported by a user equipment. Moreover, the first method may comprise, at step 630, providing third information to the user equipment, wherein the third information is based on the first and the second information.

In an embodiment, the third information may be or comprise the slice identification of FIGURE 3 and/or slice-assistance information of FIGURE 4. The first information may be determined based on information exchange between the source cell and at least one neighboring cell. Alternatively, the information regarding neighboring cells' slice support may be preconfigured to the network node (e.g. base station) of the source cell. The second information may be known to the network node (e.g. base station) of the source cell since the network node is currently communicating with the UE over at least some of the network slices supported by the UE. The UE may also inform the network node (e.g. base station) of the source cell about the UEs capabilities, e.g. during connection setup with the source cell.

In some embodiments of the first method the second information may comprise information about at least one network slice that is used by the apparatus to connect to, or communicate with, the user equipment. Alternatively, or in addition, the second information may comprise information about at least one network slice that is used by the apparatus to connect to, or communicate with, the user equipment. Communication with the user equipment may refer to having an active communication with the user equipment.

Several examples on how the third information is based on the first and second information have been given, e.g. in connection with FIGURE 4. For example, the source cell's base station may indicate only identities of the target neighbouring cells that support all or a subset of the network slices that the UE is currently applying with the source cell or that the UE supports.

A network slice is a logical instance of a mobile network and may be used to deploy several logical network instances over a common physical network infrastructure. Network slicing makes sure that the QoS targets and Service Level Agreements, SLA, for individual logical networks are optimally met while using same resources for different logical networks.

In some embodiments, the first method may comprise determining at least one slice-specific offset with respect to received signal strength or quality of a cell, and/or slice-specific threshold for determining the cell with the highest number of beams, and/or slice-specific priority and/or quality of service, QoS, value for the at least one neighboring cell and providing the at least one slice-specific offset with respect to received signal strength or quality of a cell, and/or slice-specific threshold for determining the cell with the highest number of beams, and/or slice-specific priority and/or quality of service, QoS, value to the user equipment.

Moreover, in some embodiments the first method may comprise updating the third information when a new network slice is taken into use for communication between the apparatus and the user equipment and providing the updated third information to the user equipment.

The first method may also comprise determining whether the at least one neighboring cell belongs to a same tracking area with the apparatus and provide the third information only when it is determined that the at least one neighboring cell does not belong to the same tracking area with the apparatus.

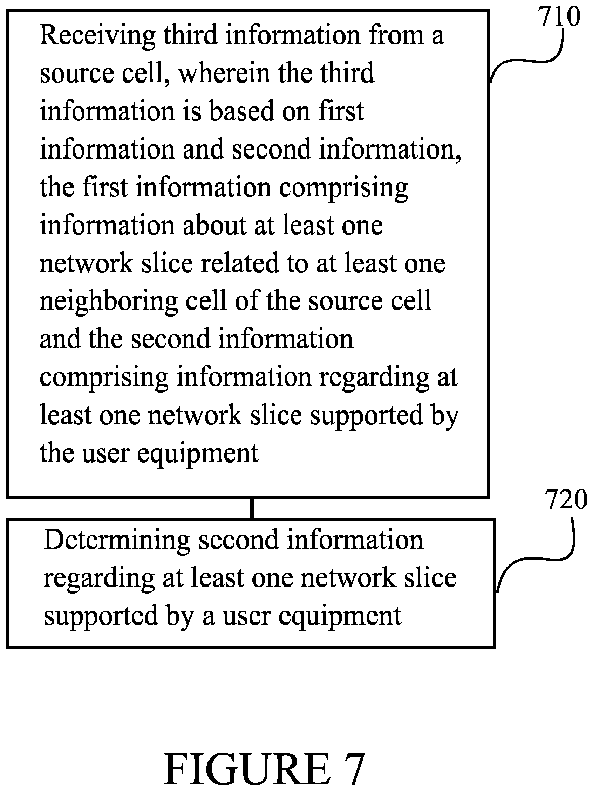

FIGURE 7 is a flow graph of a second method in accordance with at least some embodiments of the present invention. The second method may be performed by a user equipment, or a wireless terminal in general. The second method may comprise, at step 710, receiving third information from a source cell, wherein the third information is based on first information and second information, the first information comprising information about at least one network slice related to at least one neighboring cell of the source cell and the second information comprising information regarding at least one network slice supported by a user equipment. The second method may also comprise, at step 720, establishing a connection with a target cell based on the third information. According to the embodiments of the invention the source cell may refer to a network element controlling the source cell, such as, for example, a base station or radio network controller.

In some embodiments of the second method the second information may comprise information about at least one network slice that is used by the apparatus to connect to, or communicate with, the source cell. Alternatively, or in addition, the third information may comprise information about at least one network slice that is used by the apparatus to connect to, or communicate with, the source cell and supported by the at least one neighboring cell. Communication with the source cell may refer to having an active communication with the source cell.

Moreover, in some embodiments the second method may comprise receiving at least one slice-specific offset with respect to signal strength or quality of a cell, and/or slice-specific threshold for determining the cell with the highest number of beams , and/or slice-specific priority, and/or QoS value from the source cell and determining the target cell for establishing the connection based on the received at least one slice-specific offset with respect to signal strength or quality of a cell, and/or slice-specific threshold and/or QoS value.

In some embodiments of the second method the establishment of the connection with respect to the target cell is based on the third information and performed after a radio link failure or a handover failure.

The second method may also comprise receiving updated third information from the source cell after establishing a connection to a new network slice with the source cell; and establishing a connection with the target cell based on the updated third information.

In the first and the second method, the first information may comprise information about at least one network slice supported by the at least one neighboring cell. Also, the third information may comprise an identity of at least one neighboring cell which does not support any of the at least one network slice that is used by the source cell to connect to the user equipment.

In addition, or alternatively, in the first and the second method, the first information may comprise information regarding which network slices a neighboring cell supports and the second information may comprise information regarding which network slices a user equipment supports.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

In an exemplary embodiment, an apparatus, such as a module for an antenna system or an antenna array, may include means for carrying out embodiments described above and any combination thereof.

INDUSTRIAL APPLICABILITY

At least some embodiments of the present invention find industrial application in wireless communication networks that exploit network slicing.

ACRONYMS LIST

| | |
|---|---|
| 3GPP | 3rd Generation Partnership Project |
| AS | Access Stratum |
| BS | Base Station |
| CGI | Cell Global Identity |
| CN | Core Network |
| CU | Central/Centralized Unit |
| DU | Distributed Unit |
| eMBB | enhanced Mobile Broadband |
| IE | Information Element |
| LTE | Long-Term Evolution |
| MCC | Mobile Country Code |
| MNC | Mobile Network Code |
| MNO | Mobile Network Operator |
| NCGI | NR Cell Global Identifier |
| NCI | NR Cell Identity |
| NFV | Network Functions Virtualization |
| NG-RAN | Next Generation RAN |
| NR | New Radio |
| PCI | Physical Layer Cell ID |
| PLMN | Public Land Mobile Network |
| PDU | Packet Data Unit |
| PSS | Primary Synchronization Signal |
| QoS | Quality of Service |
| RAN | Radio Access Network |
| RAT | Radio Access Technology |
| RF | Radio Frequency |
| RLF | Radio Link Failure |
| RRC | Radio Resource Control |
| SD | Slice Differentiator |
| SLA | Service Level Agreement |
| SSS | Secondary Synchronization Signal |
| STT | Slice Service Type |
| S-NSSAI | Single Network Slice Selection Assistance Information |
| UE | User Equipment |
| URLLC | Ultra-Reliable Low Latency Communication |
| VNF | Virtualized Network Function |
| XnAP | Xn application protocol |

REFERENCE SIGNS LIST

| | |
|---|---|
| 110, 210 | random access message |
| 120, 220 | random access response message |
| 130, 230 | re-establishment request message |
| 140 | re-establishment message |
| 150 | re-establishment complete message |
| 240 | setup message |
| 250 | setup comple |
| 310 | type of slice service field |
| 320 | diffentiator for slices field |
| 410-440 | points of the process of FIGURE 4 |
| 500-570 | structure of the device of FIGURE 5 |
| 610-630 | phases of the first method (in FIGURE 6) |

(continued)

| 710-720 | phases of the second method (in FIGURE 7) |
|---|---|

**Claims**

1. An apparatus, comprising:

   - means for determining (610) first information about at least one network slice supported by at least one neighboring cell;
   - means for determining (620) second information regarding at least one network slice supported by a user equipment;
   **characterized in that** the apparatus further comprises
   - means for providing (630), via dedicated signaling, third information to the user equipment in a radio resource control, RRC, connected mode, wherein the third information is based on the first and the second information and the third information is useable by the user equipment in an RRC idle mode during a cell selection or reselection phase of an RRC re-establishment procedure or an RRC connection setup procedure.

2. The apparatus according to claim 1, wherein the third information comprises at least one of:
   information about at least one network slice that is used by the apparatus to connect to, or communicate with, the user equipment and supported by the at least one neighboring cell,
   an identity of at least one neighboring cell which supports all or subset of the at least one network slice that is supported by the user equipment, and
   an identity of at least one neighboring cell which does not support any network slice that is used to connect to or supported by the user equipment.

3. The apparatus according to any of the preceding claims, further comprising:

   means for determining a priority list indicating priorities between neighboring cells, wherein the priority list is determined based on first information, second information and priorities among slices; and
   means for providing, as the third information, the priority list to the user equipment.

4. The apparatus according to any of the preceding claims, further comprising:

   means for determining at least one dedicated cell-specific offset with respect to received signal strength or quality from a cell, wherein the at least one cell-specific offset is determined based on first and second information; and
   means for providing, as the third information, the at least one dedicated cell-specific offset to the user equipment.

5. The apparatus according to any of the preceding claims, further comprising:

   means for determining at least one dedicated cell-specific threshold for determining the cell with the highest number of beams, wherein the at least one cell-specific threshold is determined based on first and second information; and
   means for providing, as the third information, the at least one dedicated cell-specific threshold to the user equipment.

6. The apparatus according to any of the preceding claims, further comprising:

   - means for updating the third information when a new network slice is taken into use for communication between the apparatus and the user equipment; and
   - means for providing the updated third information to the user equipment.

7. The apparatus according to any of the preceding claims, further comprising:

   - means for determining whether the at least one neighboring cell belongs to a same tracking area with the apparatus; and

- means for providing the third information only when it is determined that the at least one neighboring cell does not belong to the same tracking area with the apparatus.

8. An apparatus, comprising:

- means for receiving (710) third information from a source cell via dedicated signaling in a radio resource control, RRC, connected mode, wherein the third information is based on first information and second information, the first information comprising information about at least one network slice supported by at least one neighboring cell of the source cell and the second information comprising information regarding at least one network slice supported by the apparatus,
- means for entering an RRC idle mode from the RRC connected mode;
- means for establishing (720) a connection with a target cell based on the third information, wherein establishing the connection comprises performing, based on the third information, a cell selection or reselection phase of an RRC re-establishment procedure or an RRC connection setup procedure.

9. The apparatus according to claim 8, wherein the third information comprises information about at least one network slice that is used by the apparatus to connect to, or communicate with, the source cell and supported by the at least one neighboring cell.

10. The apparatus according to any of claims 8 - 9, wherein the second information comprises information about at least one network slice that is used by the apparatus to connect to, or communicate with, the source cell.

11. The apparatus according to any of claims 8 - 10, wherein the third information comprises at least one of:

an identity of at least one neighboring cell which does not support any network slice that is used by the apparatus to connect to the source cell, and
an identity of at least one neighboring cell which supports all or subset of the at least one network slice that is supported by the user equipment, and.

12. The apparatus according to any of claims 8 - 11, wherein the establishment of the connection with respect to the target cell is based on the third information and performed after a radio link failure or a handover failure.

13. The apparatus according to any of claims 8 - 12, further comprising:

- means for receiving, as the third information, at least one dedicated cell-specific offset with respect to signal strength or quality of a cell, and/or dedicated cell-specific threshold for determining the cell with the highest number of beams;
- means for determining the target cell for establishing the connection based on the received at least one dedicated cell-specific offset, and/or dedicated cell-specific threshold.

14. The apparatus according to any of claims 8 - 13, further comprising:

- means for receiving updated third information from the source cell after establishing a connection to a new network slice with the source cell; and
- means for establishing a connection with the target cell based on the updated third information.

15. A method for a user equipment, comprising:

- receiving (710) third information from a source cell via dedicated signaling in a radio resource control, RRC, connected mode, wherein the third information is based on first information and second information, the first information comprising information about at least one network slice supported by at least one neighboring cell of the source cell and the second information comprising information regarding at least one network slice supported by a user equipment,
- entering an RRC idle mode from the RRC connected mode;
- establishing (720) a connection with a target cell based on the third information, wherein establishing the connection comprises performing, based on the third information, a cell selection or reselection phase of an RRC re-establishment procedure or an RRC connection setup procedure.

**Patentansprüche**

1. Eine Vorrichtung mit:

   - Mitteln zum Ermitteln (610) einer ersten Information über mindestens einen Network Slice, der durch mindestens eine Nachbarzelle unterstützt wird;
   - Mitteln zum Ermitteln (620) einer zweiten Information in Bezug auf mindestens einen Network Slice, der durch ein Benutzergerät unterstützt wird;

   **dadurch gekennzeichnet, dass** die Vorrichtung ferner umfasst:

   - Mittel zum Bereitstellen (630), über dedizierte Signalgebung, einer dritten Information an das Benutzergerät in einem Funkressourcenkontroll- oder RRC-Verbindungsmodus, wobei die dritte Information auf der ersten und zweiten Information basiert und die dritte Information durch das Benutzergerät in einem RRC-Leerlaufmodus während einer Zellenauswahl- oder Wiederauswahlphase bei einem RRC-Verbindungswiederherstellungsverfahren oder einem RRC-Verbindungsaufbauverfahren verwendbar ist.

2. Die Vorrichtung nach Anspruch 1, wobei die dritte Information mindestens eines der folgenden Elemente aufweist:

   Informationen über mindestens einen Network Slice, der von der Vorrichtung verwendet wird, um mit dem Benutzergerät verbunden zu werden oder zu kommunizieren, und der durch mindestens eine Nachbarzelle unterstützt wird,
   eine Identität mindestens einer Nachbarzelle, die mindestens einen Network Slice, der durch das Benutzergerät unterstützt wird, vollständig oder teilweise unterstützt, und
   eine Identität mindestens einer Nachbarzelle, die keinen Network Slice unterstützt, der verwendet wird, um mit dem Benutzergerät verbunden oder dadurch unterstützt zu werden.

3. Die Vorrichtung nach einem der vorstehenden Ansprüche, wobei diese Vorrichtung ferner umfasst:

   Mittel zum Ermitteln einer Prioritätsliste zwischen Nachbarzellen, wobei die Prioritätsliste auf der Basis der ersten Information, der zweiten Information und Prioritäten unter Slices ermittelt wird; und
   Mittel zum Bereitstellen, als dritte Information, der Prioritätsliste an das Benutzergerät.

4. Die Vorrichtung nach einem der vorstehenden Ansprüche, wobei diese Vorrichtung ferner umfasst:

   Mittel zum Ermitteln mindestens eines dedizierten zellspezifischen Versatzes in Bezug auf die empfangene Signalstärke oder -qualität von einer Zelle, wobei mindestens ein zellspezifischer Versatz auf der Basis der ersten und zweiten Information ermittelt wird; und
   Mittel zum Bereitstellen, als dritte Information, mindestens eines dedizierten zellspezifischen Versatzes an das Benutzergerät.

5. Die Vorrichtung nach einem der vorstehenden Ansprüche, wobei diese Vorrichtung ferner umfasst:

   Mittel zum Ermitteln mindestens einer dedizierten zellspezifischen Schwelle zum Ermitteln der Zelle mit der höchsten Anzahl von Strahlen, wobei mindestens eine zellspezifische Schwelle auf der Basis der ersten und zweiten Information ermittelt wird; und
   Mittel zum Bereitstellen, als dritte Information, mindestens einer dedizierten zellspezifischen Schwelle an das Benutzergerät.

6. Die Vorrichtung nach einem der vorstehenden Ansprüche, wobei diese Vorrichtung ferner umfasst:

   - Mittel zum Aktualisieren der dritten Information, wenn ein neuer Network Slice für die Kommunikation zwischen Vorrichtung und Benutzergerät verwendet wird; und
   - Mittel zum Bereitstellen der aktualisierten dritten Information an das Benutzergerät.

7. Die Vorrichtung nach einem der vorstehenden Ansprüche, wobei diese Vorrichtung ferner umfasst:

   - Mittel zum Ermitteln, ob mindestens eine Nachbarzelle zu demselben Nachführgebiet wie die Vorrichtung gehört; und

- Mittel zum Bereitstellen der dritten Information nur dann, wenn ermittelt wird, dass mindestens eine Nachbarzelle nicht zu demselben Nachführgebiet wie die Vorrichtung gehört.

8.  Eine Vorrichtung mit:

    - Mitteln zum Empfangen (710) der dritten Information aus einer Quellzelle über dedizierte Signalgebung in einem Funkressourcenkontroll- oder RRC-Verbindungsmodus, wobei die dritte Information auf der ersten und zweiten Information basiert, wobei die erste Information Informationen über mindestens einen Network Slice umfasst, der durch mindestens eine Nachbarzelle der Quellzelle unterstützt wird, und die zweite Information Informationen in Bezug auf mindestens einen Network Slice umfasst, der durch die Vorrichtung unterstützt wird,
    - Mitteln zum Eingeben eines RRC-Leerlaufmodus über den RRC-Verbindungsmodus;
    - Mitteln zum Herstellen (720) einer Verbindung mit einer Zielzelle auf der Basis der dritten Information, wobei das Herstellen der Verbindung das Ausführen, auf der Basis der dritten Information, einer Zellenauswahl- oder Wiederauswahlphase bei einem RRC-Verbindungswiederherstellungsverfahren oder einem RRC-Verbindungsaufbauverfahren umfasst.

9.  Die Vorrichtung nach Anspruch 8, wobei die dritte Information Informationen über mindestens einen Network Slice umfasst, der von der Vorrichtung verwendet wird, um mit der Quellzelle verbunden zu werden oder zu kommunizieren, und der durch mindestens eine Nachbarzelle unterstützt wird.

10. Die Vorrichtung nach einem der Ansprüche 8 bis 9, wobei die zweite Information Informationen über mindestens einen Network Slice umfasst, der von der Vorrichtung verwendet wird, um mit der Quellzelle verbunden zu werden oder zu kommunizieren.

11. Die Vorrichtung nach einem der Ansprüche 8 bis 10, wobei die dritte Information mindestens eines der folgenden Elemente aufweist:

    eine Identität mindestens einer Nachbarzelle, die keinen Network Slice unterstützt, der von der Vorrichtung verwendet wird, um mit der Quellzelle verbunden zu werden, und
    eine Identität mindestens einer Nachbarzelle, die mindestens einen Network Slice, der durch das Benutzergerät unterstützt wird, vollständig oder teilweise unterstützt, und.

12. Die Vorrichtung nach einem der Ansprüche 8 bis 11, wobei das Herstellen der Verbindung in Bezug auf die Zielzelle auf der dritten Information basiert und nach einer gescheiterten Funkverbindung oder einer gescheiterten Übergabe ausgeführt wird.

13. Die Vorrichtung nach einem der Ansprüche 8 bis 12, wobei die Vorrichtung ferner umfasst:

    - Mittel zum Empfangen, als dritte Information, mindestens eines dedizierten zellspezifischen Versatzes in Bezug auf die empfangene Signalstärke oder -qualität einer Zelle und/oder einer dedizierten zellspezifischen Schwelle zum Ermitteln der Zelle mit der höchsten Anzahl von Strahlen;
    - Mittel zum Ermitteln der Zielzelle zum Herstellen der Verbindung auf der Basis mindestens eines empfangenen dedizierten zellspezifischen Versatzes und/oder einer dedizierten zellspezifischen Schwelle.

14. Die Vorrichtung nach einem der Ansprüche 8 bis 13, wobei die Vorrichtung ferner umfasst:

    - Mittel zum Empfangen der aktualisierten dritten Information von der Quellzelle nach Herstellen einer Verbindung zu einem neuen Network Slice mit der Quellzelle; und
    - Mittel zum Herstellen einer Verbindung mit der Zielzelle auf der Basis der aktualisierten dritten Information.

15. Ein Verfahren für ein Benutzergerät mit:

    - Empfangen (710) der dritten Information aus einer Quellzelle über dedizierte Signalgebung in einem Funkressourcenkontroll- oder RRC-Verbindungsmodus, wobei die dritte Information auf der ersten und zweiten Information basiert, wobei die erste Information Informationen über mindestens einen Network Slice umfasst, der durch mindestens eine Nachbarzelle der Quellzelle unterstützt wird, und die zweite Information Informationen in Bezug auf mindestens einen Network Slice umfasst, der durch die Vorrichtung unterstützt wird,

- Eingeben eines RRC-Leeerlaufmodus über den RRC-Verbindungsmodus;
- Herstellen (720) einer Verbindung mit einer Zielzelle auf der Basis der dritten Information, wobei das Herstellen der Verbindung das Ausführen, auf der Basis der dritten Information, einer Zellenauswahl- oder Wiederauswahlphase bei einem RRC-Verbindungswiederherstellungsverfahren oder einem RRC-Verbindungsaufbauverfahren umfasst.

**Revendications**

1. Appareil, comprenant :

   - des moyens pour déterminer (610) une première information sur au moins une tranche de réseau supportée par au moins une cellule voisine ;
   - des moyens pour déterminer (620) une deuxième information concernant au moins une tranche de réseau supportée par un équipement utilisateur ;
   **caractérisé en ce que** l'appareil comprend en outre
   - des moyens pour fournir (630), via une signalisation dédiée, une troisième information à l'équipement utilisateur dans un mode connecté de contrôle de ressource radio, RRC, dans lequel la troisième information est basée sur la première et la deuxième information et la troisième information est utilisable par l'équipement utilisateur dans un mode inactif RRC pendant une phase de sélection ou de resélection de cellule d'une procédure de rétablissement RRC ou d'une procédure d'établissement de connexion RRC.

2. Appareil selon la revendication 1, dans lequel la troisième information comprend au moins l'une parmi :

   une information sur au moins une tranche de réseau qui est utilisée par l'appareil pour se connecter à, ou communiquer avec, l'équipement utilisateur et supportée par l'au moins une cellule voisine,
   une identité d'au moins une cellule voisine qui supporte la totalité ou un sous-ensemble de l'au moins une tranche de réseau qui est supportée par l'équipement utilisateur, et
   une identité d'au moins une cellule voisine qui ne supporte aucune tranche de réseau qui est utilisée pour se connecter à ou supportée par l'équipement utilisateur.

3. Appareil selon l'une quelconque des revendications précédentes, comprenant en outre :

   des moyens pour déterminer une liste de priorité indiquant des priorités entre des cellules voisines, dans lequel la liste de priorité est déterminée sur la base de la première information, de la deuxième information et de priorités entre des tranches ; et
   des moyens pour fournir, en tant que troisième information, la liste de priorité à l'équipement utilisateur.

4. Appareil selon l'une quelconque des revendications précédentes, comprenant en outre :

   des moyens pour déterminer au moins un décalage spécifique à une cellule dédiée par rapport à une intensité ou une qualité de signal reçue en provenance d'une cellule, dans lequel l'au moins un décalage spécifique à une cellule est déterminé sur la base d'une première et d'une deuxième information ; et
   des moyens pour fournir, en tant que troisième information, l'au moins un décalage spécifique à une cellule dédiée à l'équipement utilisateur.

5. Appareil selon l'une quelconque des revendications précédentes, comprenant en outre :

   des moyens pour déterminer au moins un seuil spécifique à une cellule dédiée pour déterminer la cellule avec le nombre de faisceaux le plus élevé, dans lequel l'au moins un seuil spécifique à une cellule est déterminé sur la base d'une première et d'une deuxième information ; et
   des moyens pour fournir, en tant que troisième information, l'au moins un seuil spécifique à une cellule dédiée à l'équipement utilisateur.

6. Appareil selon l'une quelconque des revendications précédentes, comprenant en outre :

   - des moyens pour mettre à jour la troisième information lorsqu'une nouvelle tranche de réseau est mise en service pour la communication entre l'appareil et l'équipement utilisateur ; et

- des moyens pour fournir la troisième information mise à jour à l'équipement utilisateur.

7. Appareil selon l'une quelconque des revendications précédentes, comprenant en outre :

- des moyens pour déterminer si l'au moins une cellule voisine appartient à une même zone de suivi avec l'appareil ; et
- des moyens pour fournir la troisième information uniquement lorsqu'il est déterminé que l'au moins une cellule voisine n'appartient pas à la même zone de suivi avec l'appareil.

8. Appareil, comprenant :

- des moyens pour recevoir (710) une troisième information en provenance d'une cellule source via une signalisation dédiée dans un mode connecté de contrôle de ressource radio, RRC, dans lequel la troisième information est basée sur une première information et une deuxième information, la première information comprenant une information sur au moins une tranche de réseau supportée par au moins une cellule voisine de la cellule source et la deuxième information comprenant une information concernant au moins une tranche de réseau supportée par l'appareil,
- des moyens pour entrer dans un mode inactif RRC depuis le mode connecté RRC ;
- des moyens pour établir (720) une connexion avec une cellule cible sur la base de la troisième information, dans lequel l'établissement de la connexion comprend la réalisation, sur la base de la troisième information, d'une phase de sélection ou de resélection de cellule d'une procédure de rétablissement RRC ou d'une procédure d'établissement de connexion RRC.

9. Appareil selon la revendication 8, dans lequel la troisième information comprend une information sur au moins une tranche de réseau qui est utilisée par l'appareil pour se connecter à, ou communiquer avec, la cellule source et supportée par l'au moins une cellule voisine.

10. Appareil selon l'une quelconque des revendications 8 à 9, dans lequel la deuxième information comprend une information sur au moins une tranche de réseau qui est utilisée par l'appareil pour se connecter à, ou communiquer avec, la cellule source.

11. Appareil selon l'une quelconque des revendications 8 à 10, dans lequel la troisième information comprend au moins l'une de :

une identité d'au moins une cellule voisine qui ne supporte aucune tranche de réseau qui est utilisée par l'appareil pour se connecter à la cellule source, et
une identité d'au moins une cellule voisine qui supporte la totalité ou un sous-ensemble de l'au moins une tranche de réseau qui est supportée par l'équipement utilisateur, et.

12. Appareil selon l'une quelconque des revendications 8 à 11, dans lequel l'établissement de la connexion par rapport à la cellule cible est basé sur la troisième information et réalisé après une défaillance de liaison radio ou une défaillance de transfert.

13. Appareil selon l'une quelconque des revendications 8 à 12, comprenant en outre :

- des moyens pour recevoir, en tant que troisième information, au moins un décalage spécifique à une cellule dédiée par rapport à une intensité ou une qualité de signal d'une cellule, et/ou un seuil spécifique à une cellule dédiée pour déterminer la cellule avec le nombre de faisceaux le plus élevé ;
- des moyens pour déterminer la cellule cible pour établir la connexion sur la base de l'au moins un décalage spécifique à une cellule dédiée, et/ou du seuil spécifique à une cellule dédiée reçu.

14. Appareil selon l'une quelconque des revendications 8 à 13, comprenant en outre :

- des moyens pour recevoir une troisième information mise à jour en provenance de la cellule source après l'établissement d'une connexion à une nouvelle tranche de réseau avec la cellule source ; et
- des moyens pour établir une connexion avec la cellule cible sur la base de la troisième information mise à jour.

15. Procédé pour un équipement utilisateur, comprenant :

- la réception (710) d'une troisième information en provenance d'une cellule source via une signalisation dédiée dans un mode connecté de contrôle de ressource radio, RRC, dans lequel la troisième information est basée sur une première information et une deuxième information, la première information comprenant une information sur au moins une tranche de réseau supportée par au moins une cellule voisine de la cellule source et la deuxième information comprenant une information concernant au moins une tranche de réseau supportée par un équipement utilisateur,

- l'entrée dans un mode inactif RRC depuis le mode connecté RRC ;

- l'établissement (720) d'une connexion avec une cellule cible sur la base de la troisième information, dans lequel l'établissement de la connexion comprend la réalisation, sur la base de la troisième information, d'une phase de sélection ou de resélection de cellule d'une procédure de rétablissement RRC ou d'une procédure d'établissement de connexion RRC.

FIGURE 1

UE                                                    BS

| Cell selection |

210 →

← 220

230 →

← 240

250 →

# FIGURE 2

| 310 | 320 |
|:---:|:---:|

FIGURE 3

**Cell 3**
(Slice A,
Slice MNO)

440

**Cell 1**
(Slice A,
Slice MNO)

410

420

430

**Cell 2**
(Slice "MNO",
no slice A support)

**UE**
(running slice A)

# FIGURE 4

**FIGURE 5**

Determining first information about at least one network slice regarding at least one neighboring cell — 610

Determining second information regarding at least one network slice supported by a user equipment — 620

Providing third information to the user equipment, wherein the third information is based on the first and the second information — 630

# FIGURE 6

Receiving third information from a source cell, wherein the third information is based on first information and second information, the first information comprising information about at least one network slice related to at least one neighboring cell of the source cell and the second information comprising information regarding at least one network slice supported by the user equipment

710

Determining second information regarding at least one network slice supported by a user equipment

720

# FIGURE 7

**EP 3 589 064 B1**

**REFERENCES CITED IN THE DESCRIPTION**

**Patent documents cited in the description**

- WO 2018083664 A